# EUROPEAN PATENT SPECIFICATION

(11) **EP 3 187 368 B1**
(45) Date of publication and mention of the grant of the patent: **21.10.2020**
(21) Application number: 16189420.9
(22) Date of filing: 19.09.2016
(51) Int. Cl.: B60P 3/075, B65G 69/00, G01M 17/007

(54) **VEHICLE POSITIONING APPARATUS**
FAHRZEUGPOSITIONIERUNGSVORRICHTUNG
APPAREIL DE POSITIONNEMENT DE VÉHICULE

(30) Priority: 28.12.2015 CN 201510999042
(43) Date of publication of application: 05.07.2017
(73) Proprietor: Nuctech Company Limited, TongFang Building, Shuangqinglu, Haidian District Beijing 100084 (CN)
(72) Inventor: HE, Yuan, Haidian District, Beijing 100084 (CN); WANG, Qiangqiang, Haidian District, Beijing 100084 (CN); LI, Hongqi, Haidian District, Beijing 100084 (CN)
(74) Representative: Boult Wade Tennant LLP

(56) References cited:
- CN-A- 103 921 770
- JP-B2- 3 428 208
- US-A- 2 585 126
- US-A1- 2010 251 617

## Description

### TECHNICAL FIELD

The present disclosure relates to a technical field of vehicle detection, and more particularly, to a vehicle positioning apparatus.

### BACKGROUND

Generally, it is needed to check vehicles by radiation imaging in customs, airports, railways and the like, to ensure safety. During the check, it is necessary to position the vehicles at first, ensuring that the vehicles are located within a detection scope.

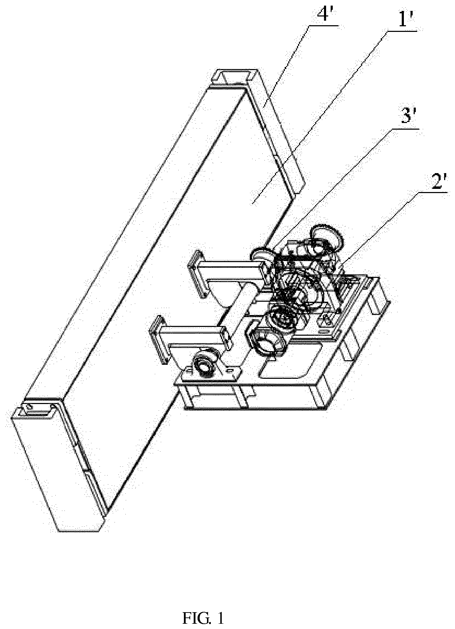

As shown in FIG. 1, an existing vehicle positioning apparatus generally positions a vehicle by a positioning block 1' protruding from a travelling surface of the vehicle. In this apparatus, a motor reducer 2' rotates to move a chain 3' connected to an output end of the reducer. The chain 3' rotates a shifting block, which moves the positioning block 1' up and down along a slideway 4'.

However, when positioning the vehicles by the positioning block protruding from the vehicle travelling surface, a bounce will always happen to wheels when the wheels hit the positioning block, affecting a positioning accuracy adversely. Further, the structure of this vehicle positioning apparatus is complex with multiple transmission pairs, increasing failure rate adversely. The following documents represent examples of similar apparatuses, and provide an overview of the existing prior art: JP 3 428 208 B2; US 2010 251 617 A1; CN 103 921 770 A; US 2 585 126 A.

### SUMMARY

An aspect of the present disclosure is to provide a vehicle positioning apparatus with a high positioning accuracy, a simple structure and a stable transmission.

To achieve above aspect, the present invention relates to an apparatus in accordance with claim 1. Exemplarily, the present disclosure provides following technical solutions:
A vehicle positioning apparatus, comprising a base provided with a recess, wherein each of two opposite sides of an upper edge of the recess is rotatably provided with a flap, a power unit is provided on an outer side of a corresponding flap opposite to the recess, and is adapted for driving the corresponding flap to transfer between a first supporting position and a second supporting position inclining downwardly, wherein the first supporting position is in a range from a position higher than the second supporting position to a position in a same plane as an upper surface of the base.

Further, the vehicle positioning apparatus further comprises a connecting member for each flap, an upper end of the connecting member is fixedly connected to a corresponding flap, and a lower end of the connecting member is rotatably connected to a retractable output shaft of the power unit corresponding to the same flap.

Further, the upper end of the connecting member is fixedly connected to a bottom surface of the corresponding flap.

Further, the connecting member and the corresponding flap are connected by welding.

Further, the power unit is a hydraulic cylinder.

Further, an end of the hydraulic cylinder opposite to the output shaft is connected to the base.

Further, the vehicle positioning apparatus further comprises a pumping station, for driving the output shaft of the hydraulic cylinder to retract or extend.

Further, an upper edge of the flap is rotatably connected to the base via a rotation shaft on the upper edge of the recess.

Further, the upper edge of the flap is connected to the rotation shaft by welding.

The advantages of the present disclosure is as follows:

The vehicle positioning apparatus provided by the present disclosure comprises a base provided with a recess, each of two opposite sides of an upper edge of the recess is rotatably provided with a flap, a power unit is provided outwardly from each flap, and is adapted for driving the flap to transfer between a first supporting position and a second supporting position inclining downwardly, wherein the first supporting position falls within a scope from a position higher than the second supporting position to a position in a same plane as an upper surface of the base. The vehicle positioning apparatus of the present disclosure achieves a precise positioning of a whole vehicle by positioning the wheels, and not only has a high positioning accuracy, a simple structure and a stable transmission, but also has a low production cost.

### BRIEF DESCRIPTION OF THE DRAWINGS

FIG. 1 is a structural diagram of a vehicle positioning apparatus in the prior art.

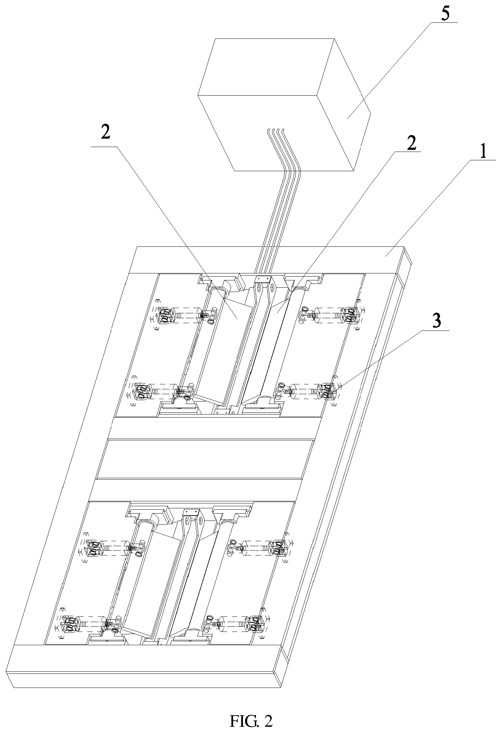

FIG. 2 is a perspective structural view of a vehicle positioning apparatus provided by the examples of the present disclosure.
FIG. 3 is a top view of the vehicle positioning apparatus provided by the examples of the present disclosure.
FIG. 4 is a structural diagram of the vehicle positioning apparatus provided by the examples of the present disclosure when the flap is turned down to a second supporting position for positioning a vehicle.
FIG. 5 is a structural diagram of the vehicle positioning apparatus provided by the examples of the present disclosure when the flap is located at a first supporting position at a same plane as an upper surface of the base.
FIG. 6 is a structural diagram of the vehicle positioning apparatus provided by the examples of the present disclosure when the flap is located at a first supporting position lower than an upper surface of the base.
FIG. 7 is a partial enlarged view of part A in FIG. 6.

### Reference numbers:

1', a positioning block; 2', a motor reducer; 3', a chain; 4', a slideway;
1, a base; 2, a flap; 3, a power unit; 4, a connecting member; 5, a pumping station; 6, a rotation shaft; 7, a wheel; and 8, a support member.

### DETAILED DESCRIPTION

The technical solution of the present disclosure will be further described in details by reference to the appended drawings and specific examples.

### Example:

The example of the present disclosure provides a vehicle positioning apparatus as show in FIG. s 2-6, including a base 1. The base 1 is provided with a recess and each of two opposite sides of an upper edge of the recess are rotatably provided with a flap 2. A power unit 3 is provided on an outer side of each flap 2 opposite to the recess, and the power unit 3 is adapted for driving a corresponding flap 2 to transfer between a first supporting position and a second supporting position inclining downwardly, wherein the first supporting position is in a range from a position higher than the second supporting position to a position in a same plane as an upper surface of the base 1.

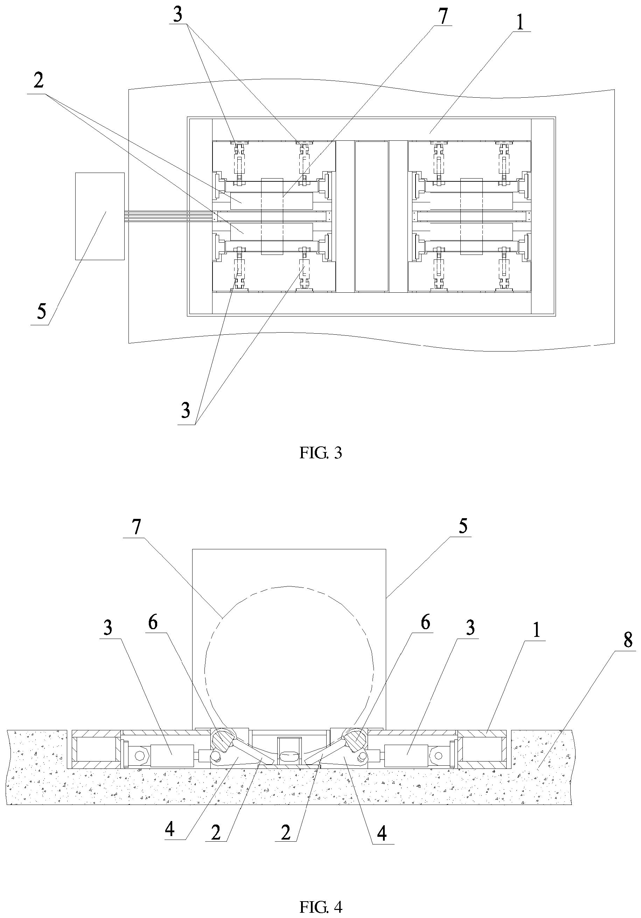

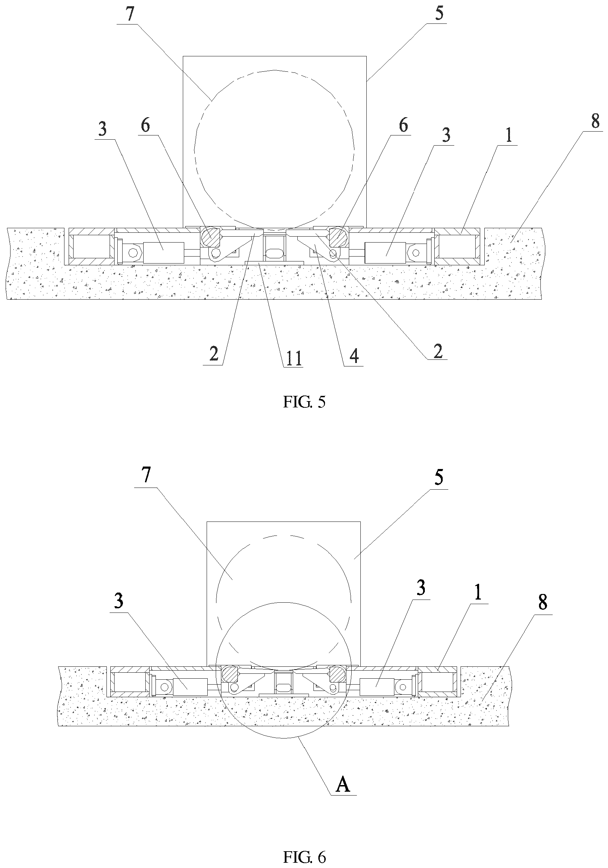

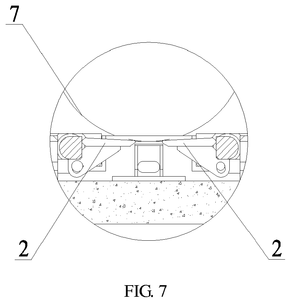

When positioning a vehicle, as shown in FIG. 4, the power units 3 drive their corresponding flaps 2 to be turned down to the second supporting position inclining downwardly, so that two flaps 2 constitute a positioning structure in a shape of V. At this state, if a wheel 7 of the vehicle moves into this positioning structure in the shape of V, the wheel 7 will sink. The driving can stop the vehicle when feeling the sink. In the case that the vehicle needs to move, as shown in FIG. 5, the power units 3 drive their corresponding flaps 2 to be turned up to the first supporting position in the same plane as the upper surface of the base 1, and uplifts the wheel 7, and then the vehicle can move away; alternatively, as shown in FIG. 6 and FIG. 7, the power units 3 drive their corresponding flaps 2 to be turned up to the position higher than the second supporting position and lower than the upper surface of the base 1, so that the two flaps 2 still can keep the shape of V, ensuring that the wheel 7 can pass without sliding. Preferably, the first supporting position is slightly lower than the upper surface of the base 1. The vehicle positioning apparatus provided in this example can achieve precise positioning of a vehicle by precisely positioning wheels of the vehicle. This vehicle positioning apparatus not only has a high positioning accuracy, a simple structure and a stable transmission, but also has a low production cost.

In this example, the base 1 is preferably provided with two recesses disposed oppositely to each other, and for each recess, the flaps and power units as described above are provided, so that two wheels 7 can be positioned at the same time. However, a number of the recesses is not limited to two, while can be specifically set according to the vehicles to be positioned.

In this example, preferably the flaps 2 provided on the two sides of the upper edge of the recess are respectively formed as a single piece of plate, while also can be constituted by at least two pieces of plate. Further, the vehicle positioning apparatus in this example can be applied to many situations where the vehicle positioning is needed. For example, the vehicle positioning apparatus in this example can be provided on a trailer for vehicle checking, and also can be provided on the ground. The vehicle positioning apparatus is preferably disposed in a recess provided in a support member 8 (for example, a body of the trailer or the ground), and can ensure that the flaps 2 are in a same plane as an upper surface of the support member except the recess, after the flaps 2 are turned up to the first supporting position which is in the same plane as the upper surface of the base 1.

As a more specific example, as shown in FIG 4 and FIG. 5, the vehicle positioning apparatus further includes a connecting member 4 for each flap 2, wherein an upper end of the connecting member 4 is fixedly connected to a corresponding flap 2, and a lower end thereof is rotatably connected to a retractable output shaft of the power unit 3 corresponding to a same flap 2 with the connecting member 4. More specifically, the upper end of the connecting member 4 is fixedly connected to a bottom surface of the corresponding flap 2. However, the upper end of the connecting member 4 also can be fixedly connected to a side surface of the corresponding flap 2, as long as the connecting member 4 can drive the flap 2 to be turned up. Further, an angle between the connecting member 4 and the corresponding flap 2 determines a flapping angle of the corresponding flap 2, and can be set in advance according to size of wheels of the vehicle to be detected. In this example, the output shaft of the power unit 3 retracts or extends to drive the connecting member 4 corresponding to the same flap 2, so that the flap 2 can rotate. The structure is simple but has a reliable stability.

In this example, the number of the connecting members 4 connected to each flap 2 is not specifically limited, and can be set according to a type of the vehicle to be detected. But, preferably, at least two connecting members 4 shall be connected to each flap 2, to improve stability of the positioning apparatus. The connecting member 4 can be a plate-like structure, but not limited to this, as long as the connecting member 4 can drive the corresponding flap 2 to be turned up or down. In this example, the power unit 3 drives the corresponding flap 2 to be turned up or down by connecting with the connecting member 4 corresponding to the same flap 2. Therefore, it is preferable that the power units 3 respectively provided on the outer side of the two flaps 2 opposite to the recess have the same amount and are symmetrical, to improve the stability of the positioning apparatus. Further, the number of the power units 3 on the outer side of the corresponding one of the two flaps 2 opposite to the recess is preferably the same as the number of the connecting members 4 connected to the same flap 2, that is, each power unit 3 drives one connecting members 4. But alternatively, the power units 3 respectively provided on the outer side of the two flaps 2 opposite to the recess also can be asymmetrical, and each power unit 3 can correspond to more than one connecting members 4.

More specifically, a hydraulic cylinder can be used for the above-mentioned power units 3, and preferably, an end of the hydraulic cylinder opposite to the output shaft thereof is connected to the base 1, to improve the stability and positioning accuracy of the vehicle positioning apparatus.

Moreover, the above-mentioned vehicle positioning apparatus further includes a pumping station, for driving the output shaft of the hydraulic cylinder to retract or extend.

More specifically, an upper edge of the flap 2 is rotatably connected to the base 1 via a rotation shaft 6 on the upper edge of the recess. At least one of the connections between the upper end of the flap 2 and the rotation shaft 6, and between the connecting member 4 and the corresponding flap 2 is achieved by welding, to ensure the stability of the positioning apparatus and to reduce the production cost.

The technical principle of the present invention is described by referring to the specific examples above. These descriptions are intended to illustrate the principle of the present disclosure, and not to limit the protective scope of the present invention as defined by the appended claims. In any manner. Other specific examples that can be thought of by those skilled in the art without spending creative labors also will fall within the protective scope of the present claims.

## Claims

1. An apparatus for ensuring a position of a vehicle, comprising: a base (1) having a top surface on which wheels of a vehicle can move and provided with at least one recess, a pair of flaps (2) oppositely disposed in each recess and rotatably supported on two opposite opening edges of the respective recess, so that each flap (2) is capable of being rotated in a wheel rotation plane, and a power unit (3) provided on an outer side of each of the two opposite opening edges of the recess, and adapted for driving the corresponding flap (2) to rotate,
the pair of flaps (2) is adapted to be rotated to form a depression lower than the top surface of the base (1) for the wheel to be limited on a moving direction of the vehicle, and adapted to be rotated to substantially align with the top surface of the base (1) for the wheel to move away from the depression by the driving of the power units (3),
**characterized in that**,
the apparatus further comprises a connecting member (4) for each flap (2), which is formed as a plate-like member, an upper edge of the connecting member (4) is in fixed connection to an undersurface of a corresponding flap (2), and a lower end of the connecting member (4) is rotatably connected to a retractable output shaft of the power unit (3) corresponding to the same flap (2), and the power unit (3) is arranged and configured such that the retractable output shaft extends or retracts in a direction parallel to the top surface of the base (1).

2. The apparatus according to claim 1, **characterized in that**: the connecting member (4) and the corresponding flap (2) are connected by welding.

3. The apparatus according to claim 1 or claim 2, **characterized in that**: the power unit (3) is a hydraulic cylinder.

4. The apparatus according to claim 3, **characterized in that**: an end of the hydraulic cylinder opposite to the output shaft is connected to the base (1).

5. The apparatus according to claim 4, **characterized in that**: the apparatus further comprises a pumping station (5), for driving the output shaft of the hydraulic cylinder to retract or extend.

6. The apparatus according to claim 1 or claim 2, **characterized in that**: one edge of each flap (2) is rotatably connected to the base (1) via a rotation shaft (6) on the opening edge of the recess.

7. The apparatus according to claim 6, **characterized in that**: the one edge of each flap (2) is connected to the rotation shaft (6) by welding.

8. The apparatus according to claim 1, further comprising a support member (8), which comprises a receiving portion for receiving the base (1), and the top surface of the base (1) is in a same plane as that of the support member (8).

## Patentansprüche

1. Eine Vorrichtung zum Sicherstellen einer Position eines Fahrzeugs, umfassend: eine Basis (1) mit einer Oberseite, auf der sich Räder eines Fahrzeugs bewegen können und die mit mindestens einer Aussparung versehen ist, einem Paar Klappen (2), die in jeder Aussparung entgegengesetzt angeordnet sind, und drehbar auf zwei gegenüberliegenden Öffnungskanten der jeweiligen Aussparung gelagert, so dass jede Klappe (2) in eine Raddrehungsebene gedreht werden kann, und eine Antriebseinheit (3), die an einer Außenseite jeder der beiden gegenüberliegenden Öffnungskanten der Aussparung vorgesehen ist und zum Antreiben der entsprechenden Klappe (2) zum Drehen geeignet ist,
wobei das Paar Klappen (2) so gedreht werden kann, um eine Vertiefung zu bilden, die niedriger als die Oberseite der Basis (1) ist, damit das Rad in einer Bewegungsrichtung des Fahrzeugs begrenzt wird, und so gedreht werden kann, dass das Paar Klappen im Wesentlichen mit der Oberseite der Basis (1) ausgerichtet ist, damit sich das Rad durch Antreiben der Antriebseinheiten (3) von der Vertiefung wegbewegt.
**dadurch gekennzeichnet, dass**
die Vorrichtung ferner ein Verbindungselement (4) für jede Klappe (2) umfasst, die als plattenartiges Element ausgebildet ist, wobei eine Oberkante des Verbindungselements (4) in fester Verbindung mit einer Unterseite einer entsprechenden Klappe (2) steht, und ein unteres Ende des Verbindungselements (4) drehbar mit einer einfahrbaren Abtriebswelle der Antriebseinheit (3), die der gleichen Klappe (2) entspricht, verbunden ist, und die Antriebseinheit (3) so angeordnet und konfiguriert ist, dass die einfahrbare Abtriebswelle in einer Richtung parallel zur Oberseite der Basis (1) ausfährt oder einfährt.

2. Die Vorrichtung nach Anspruch 1, **dadurch gekennzeichnet, dass** das Verbindungselement (4) und die entsprechende Klappe (2) durch Schweißen verbunden werden.

3. Die Vorrichtung nach Anspruch 1 oder Anspruch 2, **dadurch gekennzeichnet, dass** die Antriebseinheit (3) ein Hydraulikzylinder ist.

4. Die Vorrichtung nach Anspruch 3, **dadurch gekennzeichnet, dass** ein der Abtriebswelle gegenüberliegendes Ende des Hydraulikzylinders mit der Basis (1) verbunden ist.

5. Die Vorrichtung nach Anspruch 4, **dadurch gekennzeichnet, dass** die Vorrichtung ferner eine Pumpstation (5) zum Antreiben der Abtriebswelle des Hydraulikzylinders zum Einfahren oder Ausfahren umfasst.

6. Die Vorrichtung nach Anspruch 1 oder Anspruch 2, **dadurch gekennzeichnet, dass** eine Kante jeder Klappe (2) über eine Rotationswelle (6) an der Öffnungskante der Aussparung drehbar mit der Basis (1) verbunden ist.

7. Die Vorrichtung nach Anspruch 6, **dadurch gekennzeichnet, dass** die eine Kante jeder Klappe (2) durch Schweißen mit der Rotationswelle (6) verbunden ist.

8. Die Vorrichtung nach Anspruch 1, ferner umfassend: ein Stützelement (8), das einen Aufnahmeabschnitt zum Aufnehmen der Basis (1) umfasst, und die Oberseite der Basis (1) in derselben Ebene wie die des Stützelements (8) liegt.

## Revendications

1. Appareil pour assurer une position d'un véhicule, comprenant : une base (1) ayant une surface supérieure sur laquelle les roues d'un véhicule peuvent se déplacer et dotée d'au moins un évidement, une paire de volets (2) disposés de façon opposée dans chaque évidement et supportés en rotation sur deux bords d'ouverture opposés de l'évidement respectif, de sorte que chaque volet (2) soit capable de tourner dans un plan de rotation de roue, et une unité motrice (3) prévue sur un côté extérieur de chacun des deux bords d'ouverture opposés de l'évidement, et adaptée pour entraîner en rotation le volet (2) correspondant,
la paire de volets (2) est adaptée pour être mise en rotation afin de former une dépression plus basse que la surface supérieure de la base (1) pour que la roue soit limitée dans une direction de déplacement du véhicule, et adaptée pour être mise en rotation afin de s'aligner sensiblement avec la surface supérieure de la base (1) pour que la roue s'éloigne de la dépression par l'entraînement par les unités motrices (3),
**caractérisé en ce que**,
l'appareil comprend en outre un organe de liaison (4) pour chaque volet (2), qui est formé en tant qu'organe en forme de plaque, un bord supérieur de l'organe de liaison (4) est en liaison fixe avec une surface inférieure d'un volet correspondant (2), et une extrémité inférieure de l'organe de liaison (4) est reliée en rotation à un arbre de sortie rétractable de l'unité motrice (3) correspondant au même volet (2), et l'unité motrice (3) est agencée et configurée de sorte que l'arbre de sortie rétractable s'étende ou se rétracte dans une direction parallèle à la surface supérieure de la base (1).

2. Appareil selon la revendication 1, **caractérisé en ce que** : l'organe de liaison (4) et le volet correspondant (2) sont reliés par soudage.

3. Appareil selon la revendication 1 ou 2, **caractérisé en ce que** : l'unité motrice (3) est un cylindre hydraulique.

4. Appareil selon la revendication 3, **caractérisé en ce que** : une extrémité du cylindre hydraulique opposé à l'arbre de sortie est reliée à la base (1).

5. Appareil selon la revendication 4, l'appareil étant **caractérisé en ce qu'**il comprend en outre une station de pompage (5), pour entraîner l'arbre de sortie du cylindre hydraulique afin de se rétracter ou s'étendre.

6. Appareil selon la revendication 1 ou 2, **caractérisé en ce que** : un bord de chaque volet (2) est relié en rotation à la base (1) via un arbre de rotation (6) sur le bord d'ouverture de l'évidement.

7. Appareil selon la revendication 6, **caractérisé en ce que** : ledit bord de chaque volet (2) est relié à l'arbre de rotation (6) par soudage.

8. Appareil selon la revendication 1, comprenant en outre un organe de support (8), qui comprend une partie de réception pour recevoir la base (1), et la surface supérieure de la base (1) est dans un même plan que celui de l'organe de support (8).
